(19) Europäisches Patentamt
European Patent Office
Office européen des brevets

(11) **EP 4 600 701 A1**

(12) **EUROPEAN PATENT APPLICATION**
published in accordance with Art. 153(4) EPC

(43) Date of publication:
**13.08.2025   Bulletin 2025/33**

(21) Application number: **23871059.4**

(22) Date of filing: **28.09.2023**

(51) International Patent Classification (IPC):
**G01V 1/30** (2006.01)

(52) Cooperative Patent Classification (CPC):
**G01V 1/30**

(86) International application number:
**PCT/CN2023/122765**

(87) International publication number:
**WO 2024/067835 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.09.2022   CN 202211215823**

(71) Applicants:
- **China Petroleum & Chemical Corporation Beijing 100728 (CN)**
- **Sinopec Geophysical Research Institute Co., Ltd. Nanjing, Jiangsu 211103 (CN)**

(72) Inventors:
- **SUN, Zhentao Nanjing, Jiangsu 211103 (CN)**
- **ZHANG, Kefei Nanjing, Jiangsu 211103 (CN)**
- **LIU, Dingjin Nanjing, Jiangsu 211103 (CN)**
- **WANG, Lixin Nanjing, Jiangsu 211103 (CN)**
- **HU, Huafeng Nanjing, Jiangsu 211103 (CN)**
- **LIN, Zhengliang Nanjing, Jiangsu 211103 (CN)**

(74) Representative: **Hoffmann Eitle Patent- und Rechtsanwälte PartmbB Arabellastraße 30 81925 München (DE)**

(54) **GAS-POTENTIAL PREDICTION METHOD AND APPARATUS BASED ON DOMINANT INCIDENT ANGLE AND FREQUENCY DOUBLE-DOMAIN ATTENUATION**

(57) Provided in the present disclosure are a gas-bearing prediction method and apparatus based on dominant incident angle and frequency double-domain attenuation. In the method, an attenuation attribute is captured from a pre-stack gather within a range of dominant incident angles, the attenuation attribute being an improved high-frequency attenuation gradient attribute; and a gas-bearing sensitive factor is formed to complete gas-bearing prediction. Further provided in the present disclosure are a prediction apparatus, a computer readable storage medium and an electronic device.

Figure 1

**Description**

**Cross-Reference to Related Application**

The present application claims the priority of Chinese Patent Application No. 2022112158237 entitled "Gas-bearing prediction method based on dominant incident angle and frequency double-domain attenuation" and filed on September 30, 2022, the content of which is incorporated herein by reference in its entirety.

**Field of the Invention**

The present disclosure relates to the field of geophysical oil-gas exploration technology, and specifically to a gas-bearing prediction method and apparatus based on dominant-incident-angle-and-frequency double-domain attenuation, and a storage medium and a device for the same.

**Background of the Invention**

At present, gas-bearing prediction methods are classified into two types. One type of gas-bearing prediction method is based on post-stack seismic data, and mainly focus on post-stack attenuation attributes. This type of method is currently relatively mature in development, but its defects lie in that, only limited post-stack information can be used in this method so that the application effects thereof are limited. The other type of gas-bearing prediction methods is based on pre-stack seismic data, and applies pre-stack inversion to construct mainly sensitive elastic parameters related to gas bearing by rock physical modeling. However, this type of method has the following several problems: firstly, the inversion itself has limitation, specifically including multiplicity of solutions for an inversion algorithm, difficulty in constructing a low-frequency model that conforms to geological understanding, difficulty in obtaining stable wavelets with uniform morphology throughout an entire region, and difficulty in ensuring the inversion effect when there are no or few wells; secondly, properties of the elastic parameters produce an effect thereto, that is, when the reservoir stratum bears gas, an impact of the physical properties of the reservoir stratum on the elastic parameters is significantly greater than an impact of difference in gas bearing on the elastic parameters, thereby making it difficult to obtain a prediction result with high accuracy.

Therefore, there is an urgent need for a high-accuracy gas-bearing prediction method based on pre-stack seismic data.

**Summary of the Invention**

The objective of the present disclosure is to construct a gas-bearing prediction method that is not affected by limitations of an inversion method and involves both pre-stack seismic data information and attenuation information. The present disclosure innovatively constructs a pre-stack attenuation attribute, i.e., an attribute that pre-stack attenuation gradient changes along with incident angles, thereby avoiding an impact of the properties of elastic parameters on the accuracy of gas-bearing prediction. During the calculation process, the pre-stack attenuation attribute is only based on pre-stack seismic data, thereby overcoming the problem of a conventional inversion method is susceptible to a drilling well. By automatically capturing pre-stack seismic data within a range of dominant incident angles, the pre-stack attenuation attribute is enabled to overcome an impact of seismic data processing quality on AVO characteristic of the pre-stack seismic data to a certain extent, thereby achieving gas-bearing prediction.

In a first aspect, the present disclosure provides a gas-bearing prediction method based on dominant incident angle and frequency double-domain attenuation, in which:

capturing an attenuation attribute from a pre-stack gather within a range of dominant incident angles, and forming a gas-bearing sensitive factor to complete gas-bearing prediction;
the gas-bearing sensitive factor is expressed as *a*, and its expression is as follows:

$$a = \frac{n\sum_{i=1}^{n} x_i y_i - \sum_{i=1}^{n} x_i \sum_{i=1}^{n} y_i}{n\sum_{i=1}^{n} x_i^2 - \sum_{i=1}^{n} x_i}$$

wherein $y_i$ is an attenuation gradient attribute value at an angle of $x_i$, $x_i$ is an incident angle, $n$ is the number of incident angles, and $n$ is an integer of $\geq 3$.

As a specific implementation of the present disclosure, an expression of an improved high-frequency attenuation gradient attribute is as follows:

$$y = \frac{E_2' - E_1'}{f_2 - f_1} \quad , \qquad E_1' = \int_{f_{max}}^{f_1} f A(f)^2 \, df \quad , \qquad E_2' = \int_{f_{max}}^{f_2} f A(f)^2 \, df \quad ,$$

wherein, $f$ is a frequency, measured in Hz;

$$\frac{\int_{f_{max}}^{f} f A(f)^k \, df}{\int_{f_{max}}^{\infty} A(f)^k \, df} = \mathrm{Fre1}$$

$f_1$ is an frequency at      , measured in Hz;

$$\frac{\int_{f_{max}}^{f} f A(f)^k \, df}{\int_{f_{max}}^{\infty} A(f)^k \, df} = \mathrm{Fre2}$$

$f_2$ is an frequency at      , measured in Hz;
$f_{max}$ is an frequency corresponding to a peak energy $Amp_{max}$, measured in Hz;
$A(f)$ is an amplitude spectrum;
$E_1'$ is a seismic wave energy at high-frequency portion Fre1 with a value ranging from 51% to 99%;
$E_2'$ is a seismic wave energy at high-frequency portion Fre2 with a value ranging from 51% to 99%, and Fre2>Fre1.

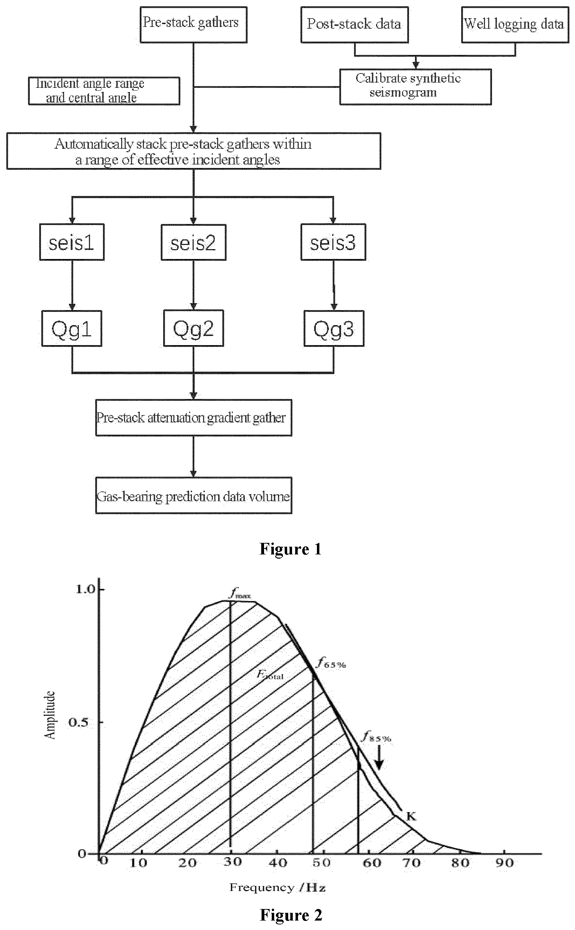

The expression of the improved high-frequency attenuation gradient attribute is obtained by squaring an amplitude spectrum; specifically, as shown in Figure 2, a frequency of a maximum amplitude that is detected on a time-frequency profile is taken as an initial attenuation frequency, and the seismic wave energies at high-frequency ends Fre1 and Fre2 are calculated respectively, and the calculated results are subjected to fitting to obtain a frequency domain energy attenuation gradient, which is expressed as:

$$y^{high} = \frac{E_2 - E_1}{f_2 - f_1} \quad ,$$

wherein $f_{"2ax}$ is the frequency corresponding to the peak energy $Amp_{max}$.
An expression of an original high-frequency attenuation gradient is denoted as:

$$E_1 = \frac{\int_0^{\infty} f A(f) \, df}{\int_0^{\infty} A(f) \, df} \times \mathrm{Fre1}$$

$$E_2 = \frac{\int_0^{\infty} f A(f) \, df}{\int_0^{\infty} A(f) \, df} \times \mathrm{Fre2}$$

wherein $f$ is a frequency, measured in Hz,

$A(f)$ is an amplitude spectrum;

$E'_1$ is a seismic wave energy at high-frequency portion Fre1 with a value ranging from 51% to 99%;

$E'_2$ is a seismic wave energy at high-frequency portion Fre2 with a value ranging from 51% to 99%, and Fre2>Fre1.

An expression of the improved high-frequency attenuation gradient attribute obtained by squaring the amplitude spectrum is as follows:

$$y = \frac{E'_2 - E'_1}{f_2 - f_1}$$

$$E'_1 = \frac{\int_0^\infty f A(f)^2 \, df}{\int_0^\infty A(f) \, df} \times \text{Fre1}$$

$$E'_2 = \frac{\int_0^\infty f A(f)^2 \, df}{\int_0^\infty A(f) \, df} \times \text{Fre2}$$

wherein, $f$ is the frequency, measured in Hz;

$A(f)$ is the amplitude spectrum,

$E'_1$ is the seismic wave energy at high-frequency portion Fre1 with a value ranging from 51% to 99%;

$E'_2$ is the seismic wave energy at high-frequency portion Fre2 with a value ranging from 51% to 99%, and Fre2>Fre1.

According to the present disclosure, $A(f)$ is a frequency spectrum, which may be calculated by using a matching pursuit algorithm and/or a MP algorithm.

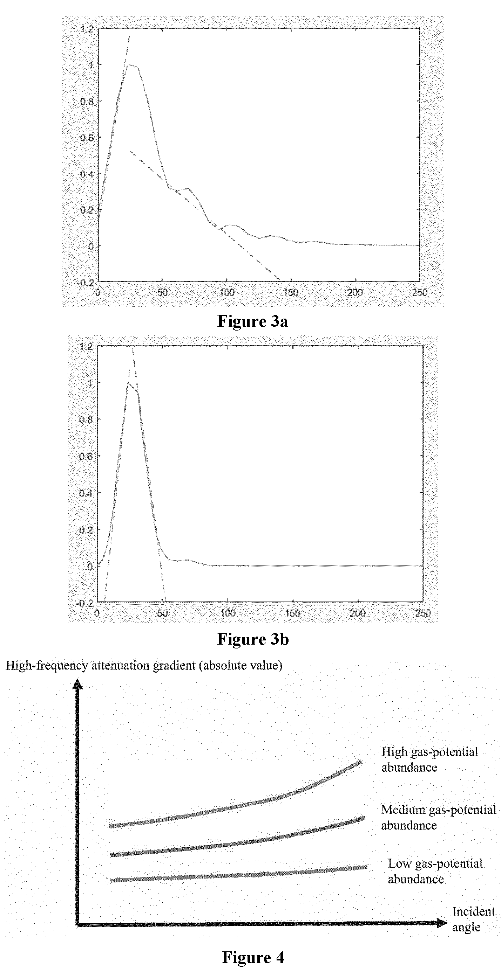

The high-frequency attenuation gradient attribute is based on matching pursuit of high-accuracy time-frequency analysis, and is an attribute how frequencies of a seismic wave change is reflected by the frequencies corresponding to Fre1=65% and Fre2=85% energy, as shown in Figure 2. When pores in reservoir stratum are relatively developed and are full of gas, in the seismic wave, attenuation of a high-frequency energy is significantly greater than attenuation of a low-frequency energy. Therefore, gas-bearing characteristic of the reservoir stratum can be predicted by calculating an attenuation gradient at high-frequency portion. However, in the process of practical application, frequency spectrum of pre-stack gather is not regular in morphology, as shown in Figure 3a, energy of frequency spectrum in the high-frequency range of 51-99 Hz exists rise-up in some parts, rather than the energy gradual decreasing along with decreasing frequency. Thus, when the calculation of the high-frequency gradient attribute is performed, a result of the calculation may be inaccurate due to the abnormal frequency spectrum in this portion. In the present disclosure, based on the idea of performing calculation on attributes such as frequency spectrum skewness, kurtosis and the like, the frequency spectrum can be modified thereby to eliminate an impact of this phenomenon on the calculation result. A modified frequency spectrum as shown in Figure 3b is more approximate to a theoretical frequency spectrum, in which energy information within a seismically effective dominant frequency range is mainly retained. A high-frequency attenuation gradient attribute calculated based on this can more effectively exert inversion on attenuation information within the seismically effective dominant frequency range, thereby improving prediction accuracy.

As a specific implementation of the present disclosure, for a rule how the high-frequency attenuation gradient attribute changes along with the incident angles, a least square method is applied on fitting the rule that the attenuation gradient changes along with the incident angles.

A value of the attenuation gradient attribute is $y=\{y_1, y_2, \ldots y_n\}$, its corresponding angle is: $x=\{x_1, x_2, \cdots x_n\}$, and both of them satisfy: $y=ax+b,$ wherein $n$ is the number of incident angles, and $n$ is an integer of $\geq 3$.

An objective function is constructed based on the principle of the least square method:

$$\delta = \min \sum_{i=1}^{k} \left[ y_i - \left( ax_i + b \right) \right]^2$$

in the expression, $y=\{y_1, y_2, ...y_n\}$ is a value of the attenuation gradient attribute, $x=\{x_1, x_2, \cdots x_n\}$ is a related angle, $a$ is a gradient to be calculated, i.e., a gas-bearing sensitive factor, and $b$ is a fitting coefficient of least square; and $n$ is the number of incident angles, and $n$ is an integer of $\geq 3$;

$a$ and $b$ is derived respectively to minimize the objective function, and a problem how to solve the objective function is transformed into solving a matrix:

$$\begin{bmatrix} n & \sum_{i=1}^{n} x_i \\ \sum_{i=1}^{n} x_i & \sum_{i=1}^{n} x_i^2 \end{bmatrix} \begin{bmatrix} b \\ a \end{bmatrix} = \begin{bmatrix} \sum_{i=1}^{n} y_i \\ \sum_{i=1}^{n} x_i y_i \end{bmatrix}$$

in the expression, $a$ is the gas-bearing sensitive factor, $b$ is the fitting coefficient of least square, $y_i$ is a value of the attenuation gradient attribute at an angle of $x_i$, $n$ is the number of incident angles, and $n$ is an integer of $\geq 3$; and calculation is performed to obtain an expression:

$$a = \frac{n \sum_{i=1}^{n} x_i y_i - \sum_{i=1}^{n} x_i \sum_{i=1}^{n} y_i}{n \sum_{i=1}^{n} x_i^2 - \sum_{i=1}^{n} x_i}$$

in the expression, $a$ is the gas-bearing sensitive factor, $b$ is the fitting coefficient of least square, $y_i$ is a value of the attenuation gradient attribute at an angle of $x_i$, $n$ is the number of incident angles, and $n$ is an integer of $\geq 3$.

According to the present disclosure, $a$ represents change of the pre-stack attenuation gradient along with the angles, that is, a seismic property how the high-frequency attenuation gradient attribute changes along with the incident angles, namely, the gas-bearing sensitive factor of the present disclosure.

According to the theory of propagation of seismic waves, in pre-stack seismic data, a propagation distance of seismic trace with a large incident angle in a gas-bearing area of the reservoir stratum is greater than that of seismic trace with a small incident angle in the gas-bearing area of the reservoir stratum. Accordingly, compared with the seismic trace with the small incident angle, high-frequency component of the seismic trace with the large incident angle attenuate faster than low-frequency component. Such a phenomenon is positively correlated with a gas-bearing abundance of the reservoir stratum, as shown in Figure 4. When the gas-bearing abundance of the reservoir stratum is low, the rule that the high-frequency attenuation gradient attribute changes along with the incident angles is not obvious; when the gas-bearing abundance of the reservoir stratum is medium, there is a certain positive correlation between the high-frequency attenuation gradient attribute and the incident angles; and when the gas-bearing abundance of the reservoir stratum is high, a positive correlation rule that the high-frequency attenuation gradient attribute changes along with the incident angles is very notable. Also, it can be seen from Figure 4 that, if the high-frequency attenuation gradient attributes under the large and small angles are used separately, the gas-bearing abundances may also be distinguished theoretically. However, in practical data applications, it is difficult to achieve perfect fidelity of seismic data. Therefore, the seismic data volumes under the large and small angles may both be distorted due to various reasons. Directly capturing the high-frequency attenuation gradient attribute that changes along with the incident angles involves a relatively-changing relationship, which can avoid the problems caused by seismic data processing to some extent.

As a specific implementation of the present disclosure, the method comprises the following steps:

S1: acquiring pre-stack angle domain gathers, post-stack seismic data, a stratigraphic position interpretation result of a target stratum, and well logging data, and completing calibration of synthetic seismogram to obtain seismic response characteristic of the target stratum;

S2: determining a time range corresponding to the target stratum in the pre-stack angle gathers based on the calibration and a well logging curve, and analyzing the seismic response characteristic of the target stratum of each drilling well to obtain a range of corresponding effective incident angles;

S3: determining, according to the range of the effective incident angles obtained in step S2, incident angle stack ranges and corresponding central incident angles of 3 partial-angle-stacked data volumes;

S4: performing stacking based on the incident angle stack ranges and corresponding central incident angles of the 3 partial-angle-stacked data volumes in step S3 to obtain partial-angle-stacked data;

S5: extracting high-frequency attenuation gradient attributes respectively from the partial-angle-stacked data obtained in step S4, and combining them with the corresponding central incident angles of the 3 seismic data volumes to resynthesize into a pre-stack attenuation gradient gather;

S6: performing regression fitting on an attenuation gradient attribute and an incident angle at each time point based on the pre-stack attenuation gradient gather newly formed in step S5 to obtain a gradient data volume in which the attenuation gradient attribute changes along with the incident angle; and

S7: comparing the gradient data volume obtained in step S6 with that of the drilling well, and performing analysis to obtain a gas-bearing prediction result of the target stratum.

As a specific implementation of the present disclosure, in the step S3, determining, according to the range of the effective incident angles, incident angle stack ranges and corresponding central incident angles of n partial-angle-stacked data volumes comprises:

denoting the range of the effective incident angles as A to B, wherein A and B both represent incident angles, denoting a range of effective seismic response of the target stratum of individual drilling wells in the pre-stack gather as A1, B1, A2, B2,..., Am, Bm, wherein m is the number of the drilling wells;
calculating angle intervals C1=B1-A1, C2=B2-A2,..., Cm=Bm-Am, wherein m is the number of the drilling wells;
obtaining a constant angle interval C=(C1+C2+...+Cm)/m; wherein m is the number of the drilling wells; and
dividing, based on the constant angle interval, the n partial-angle-stacked data volumes to obtain incident angle stack ranges, and performing calculation to obtain corresponding central incident angles.

As a specific implementation of the present disclosure, a method for stacking in the step S4 comprises: performing direct stacking when the incident angle stack ranges are constant; and firstly determining a next incident angle stack range and a corresponding central incident angle when the incident angle stack ranges change with channel number of seismic lines.

As a specific implementation of the present disclosure, in a specific method for determining the incident angle stack ranges and the corresponding central incident angles, three drilling wells and three partial-angle-stacked data volumes are taken as an example (i.e., m=3, n=3):

In the step S3, the incident angle stack ranges of the three partial-angle-stacked data volumes are denoted as seis1, seis2 and seis3, wherein seis1 is a fixed-incident-angle stack volume, seis3 is data in which incident angle stack ranges of individual channel data are different, and seis2 is data in which incident angle stack ranges of individual channel data are different; wherein,
an incident angle stack range of seis1 is 1-C, and a corresponding central incident angle center_angle1=(1+C)/2,
an incident angle stack range of seis2 is D-E, and a corresponding central incident angle center_angle2=(D+E)/2,
an incident angle stack range of seis3 is A-B, and a corresponding central incident angle center_angle3=(A+B)/2,
wherein, D=(1+A)/2, E=(C+B)/2,

In the step S4, based on the time range corresponding to the target stratum in the pre-stack angle gather obtained in step S2, existing stratigraphic position data is used to from constraint, so as to ensure that the seismic response characteristic corresponding to the target stratum is within the inter-stratigraphic range, and inter-stratigraphic geological bodies are of the same sedimentary period. The method for stacking may be implemented via programming:

(1) setting, for an i-th CDP (Common Depth Point) ($1 \le i \le$ maximum number of CDPs), a stratigraphic position data range to be from time_start to time_end, the number of longitudinal sampling points N=(time_end-time_start)/sampling interval+1, an incident angle data range is from angle_start to angle_end, the number of the incident angles M= (angle_end-angle_start)/incident angle interval+1, and an amplitude value is a matrix *amplitude*[N, M] of N rows, M columns;

(2) finding a minimum value of the matrix *amplitude*[N, M], i.e., a maximum value at a trough of wave, with a corresponding incident angle center_angle3, given that A=center_angle3-C/2 and B=center_angle3+C/2, and obtaining D, E and center_angle2 corresponding to the seis2 volume via calculation according to the formulas in step S3; and

(3) obtaining stack volumes of seis1, seis2, and seis3.

In the step S5, the high-frequency attenuation gradient attributes are extracted with respect to seis1, seis2, and seis3, respectively, to obtain Qg1, Qg2, Qg3,
wherein, Qg1 is a high-frequency attenuation gradient attribute volume corresponding to seis1, Qg2 is a high-frequency attenuation gradient attribute volume corresponding to seis2, and Qg3 is a high-frequency attenuation gradient attribute volume corresponding to seis3.

For the resynthesized pre-stack attenuation gradient gather, three incident angles in an individual gather change with CDPs. A first incident angle is (1+C)/2, a second incident angle is (D+E)/2, and a third incident angle is (A+B)/2.

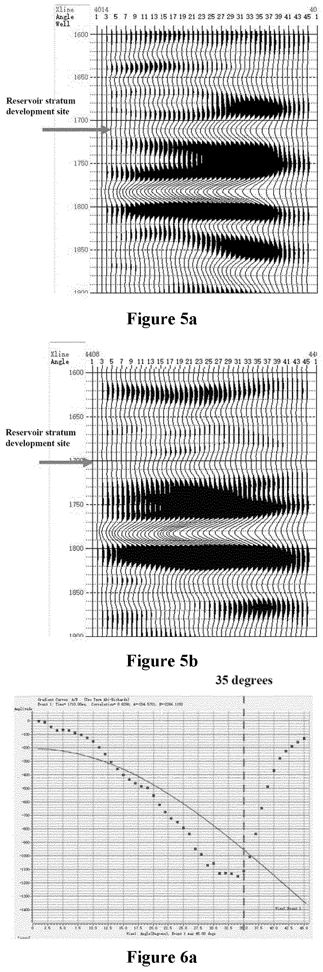

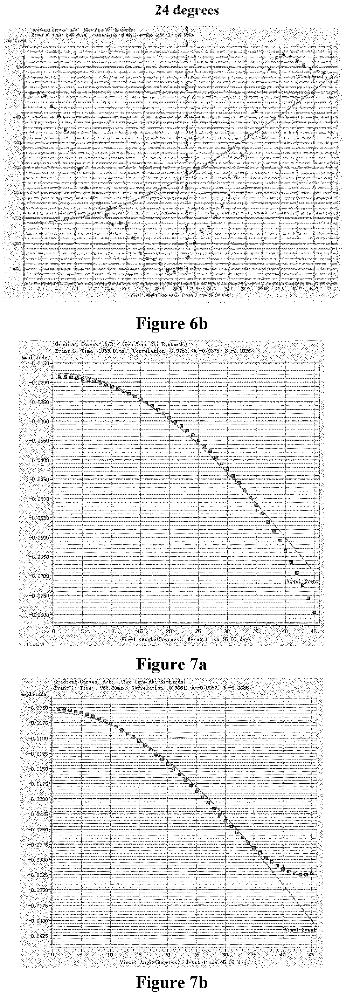

As a specific implementation of the present disclosure, in practical applications, there is significant difference in pre-stack AVO characteristics at reservoir stratum developing sites of different wells due to changes in lithology and physical properties, or the quality of seismic data processing. Analysis will be performed as following by using drilling wells, wherein drilling well 1 is a high gas production well with a reservoir stratum thickness of 20 m, and drilling well 2 is a low gas production well with a reservoir stratum thickness of 5.2 m. Figures 5a and 5b show well-side pre-stack angle domain gathers of drilling wells 1 and 2. Figures 6a and 6b show AVO characteristics of well-side gather reservoir stratum developing sections of drilling wells 1 and 2. Figures 7a and 7b show AVO characteristics of forward-modeling gather reservoir stratum developing sections of drilling wells 1 and 2. By comparison between the AVO characteristic of the forward-modeling gather and the AVO characteristic of the well-side gather, in which an incident angle range of the drilling well 1, which is in a range of 1-35 degrees, is consistent with that of the forward-modeling gather while an incident angle range of the drilling well 2, which is in a range of 1-24 degrees, is consistent with that of the forward-modeling gather. it is thus concluded that the effective incident angle ranges of the drilling well 1 and the drilling well 2 are 1-35 degrees and 1-24 degrees, respectively, and the effective incident angle ranges of the two wells differ by 11 degrees. However, if a prediction is performed based on the effective incident angle range of the drilling well 1, the prediction accuracy may be influenced due to inaccuracy of the AVO characteristic of the drilling well 2 at 24-35 degrees, and if a prediction is performed based on the effective incident angle range of the drilling well 2, seismic information of the drilling well 1 at 24-35 degrees will be lost.

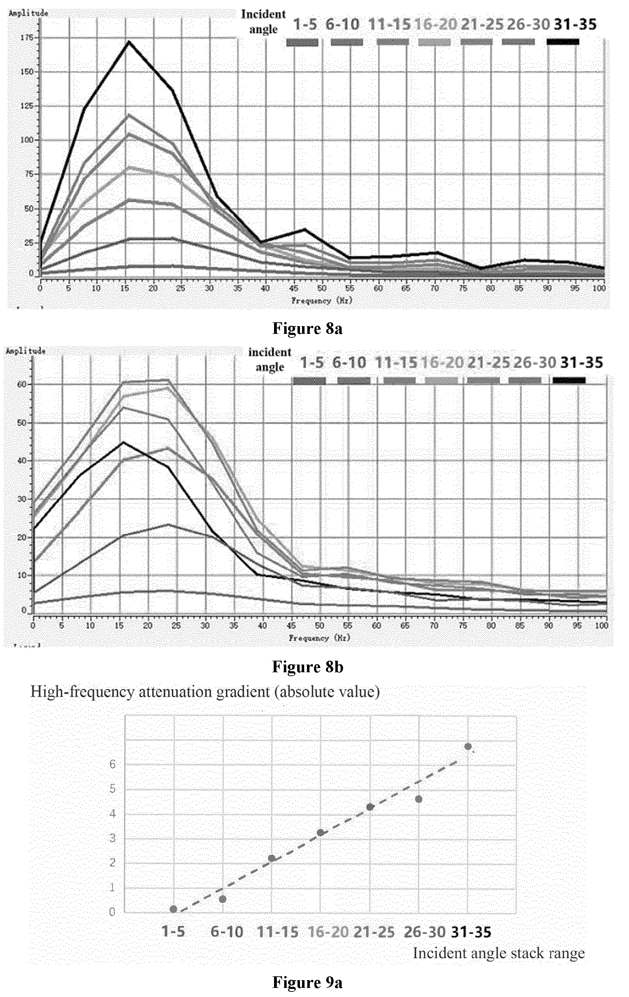

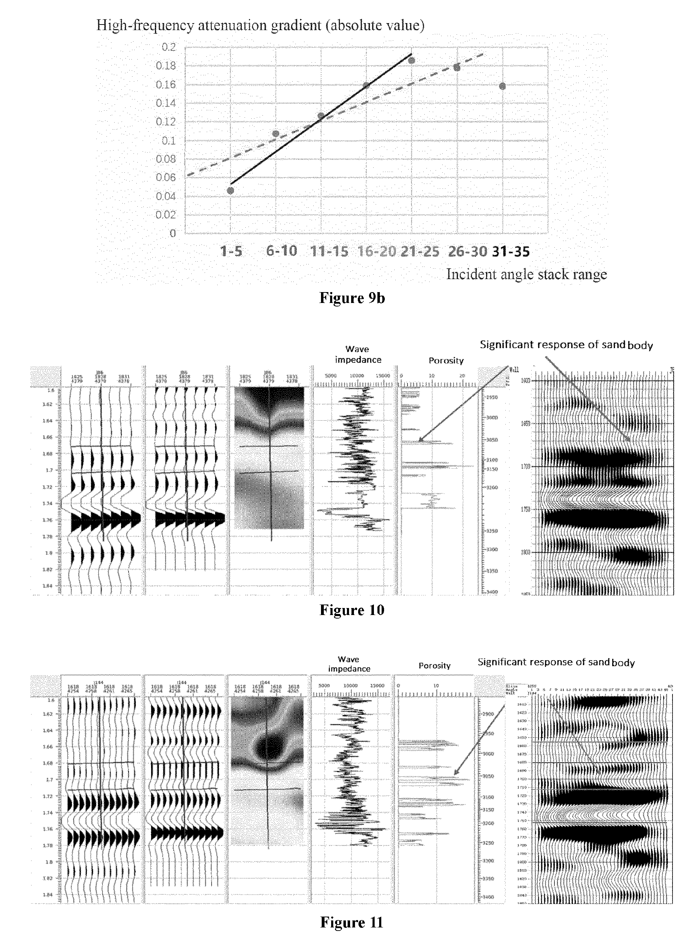

Pre-stack frequency spectrum characteristics of the drilling well 1 and the drilling well 2 will be analyzed below. Figures 8a and 8b show pre-stack frequency spectrum characteristics of reservoir stratum developing sections of the drilling well 1 and the drilling well 2 which are both in a same incident angle range (1-35 degrees). From the figures, it can be seen that, in a dominant incident angle range of the drilling well 1, with an incident angle being larger, the frequency spectrum of the drilling well 1 has further enhanced energy, and attenuation at high-frequency section is increased; but a rule that the frequency spectrum of the drilling well 2 changes with the increase of the incident angle is influenced by two stack volumes of 26-30 degrees and 31-35 degrees, so that the rule is not obvious. Figures 9a and 9b show high-frequency attenuation gradient attributes calculated for the drilling well 1 and the drilling well 2, with a horizontal axis representing angle ranges of partial stack volumes. From Figure 9a, it can be seen that the high-frequency attenuation gradient attribute of the drilling well 1 increases with the increase of an incident angle, and a fitted relationship that the high-frequency attenuation gradient attribute changes along with the incident angles is relatively good. However, in Figure 9b, a red dashed line represents a fitted curve within a range of 1-35 degrees, a black line represents a fitted curve within a range of 1-25 degrees, and there is a certain difference between the two fitted curves. The incident angle range (1-24°) is the dominant incident angle range of the drilling well 2, within which range, a fitted relationship that the high-frequency attenuation gradient attribute changes along with the incident angles is relatively good; and when two stack volumes of 26-30 degrees and 31-35 degrees are added, since its AVO characteristic per se is not consistent with those for forward-modeling stimulation, there is a certain error in a fitted relationship that the high-frequency attenuation gradient attribute changes along with the incident angle. Therefore, it is not applicable to select the same incident angle range for gas-bearing prediction with respect to the drilling well 1 and the drilling well 2, and respective dominant incident angle ranges of the drilling well 1 and the drilling well 2 should be selected.

In a second aspect, the present disclosure provides a gas-bearing prediction apparatus based on dominant-incident-angle-and-frequency double-domain attenuation, comprising:

a pre-stack gather collection unit, configured to collect pre-stack angle domain gathers and determine incident angle ranges of the pre-stack angle domain gathers;

a data processing unit, configured to perform stacking on the pre-stack angle domain gathers according to effective incident angle ranges, and obtain partial-angle-stacked seismic data;

a high-frequency attenuation gradient attribute extraction unit, configured to extract high-frequency attenuation gradient attributes of the partial-angle-stacked seismic data;

a regression fitting unit, configured to perform regression fitting based on an attenuation gradient attribute and an incident angle at each time point, to obtain a gradient data volume in which the attenuation gradient attribute changes along with the incident angle, that is, a gas-bearing sensitive factor; and

a prediction unit, configured to extract a feature that the gas-bearing sensitive factor of a target stratigraphic position changes along with incident angles, to complete gas-bearing prediction of the target stratigraphic position.

In a third aspect, the present disclosure provides a computer-readable storage medium, on which a computer program is stored, which can be executed by one or more processors to implement the method described in the first aspect.

In a fourth aspect, the present disclosure provides an electronic device comprising a memory and one or more processors, wherein a computer program is stored on the memory, and the computer program, when executed by the one or more processors, implements the method described in the first aspect.

Compared with the existing technology, the advantageous effects of the present disclosure lie in that:

1. The principle of the present disclosure lies in that: firstly, pre-stack angle domain gathers are subjected to stacking in terms of varied incident angle ranges to obtain a plurality of partially-stacked data volumes; post-stack high-frequency attenuation gradient attributes are then extracted from the plurality of partially-stacked data volumes, wherein since the plurality of post-stack high-frequency attenuation gradient attribute volumes contain information of angles, different from the conventional high-frequency attenuation gradient attribute volumes that are calculated directly from the post-stack seismic data; and then, the plurality of post-stack high-frequency attenuation gradient attribute volumes are rearranged according to the angles to form a pre-stack gather having only these few angles, wherein the energy of this new pre-stack gather represents the high-frequency attenuation gradient attributes, and these angles vary for each CDP point; and finally, for the new pre-stack gather, a rule that the attribute changes along with the incident angles is fitted to obtain a gas-bearing sensitive factor. However, in the existing technology, input data for conventional pre-stack inversion is obtained by stacking the pre-stack angle domain gathers according to different incident angle ranges, wherein incident angle partially-stacked ranges at individual CDP points are consistent; several partially-stacked data volumes are obtained thereby; and these several partially-stacked data volumes are taken as inputs to output, using an inversion algorithm, longitudinal wave velocity and density, transverse wave velocity and density, or longitudinal wave impedance, transverse wave impedance and density. In the prediction method according to the present disclosure, the pre-stack seismic data is used for calculation, the pre-stack seismic data having richer information as compared to the post-stack data used in the existing technology.

2. The prediction method of the present disclosure is entirely based on the pre-stack seismic data, thereby achieving a more objective prediction result with low multiplicity of solutions.

## Brief Description of the Drawings

Figure 1 is a flowchart of a gas-bearing prediction method according to an embodiment of the present disclosure;

Figure 2 is a schematic diagram of a high-frequency attenuation gradient attribute in the present disclosure;

Figure 3a is a schematic diagram of frequency spectrum of an actual data in the present disclosure;

Figure 3b is a schematic diagram of frequency spectrum of the actual data after improvement in the present disclosure;

Figure 4 is a schematic diagram of a high-frequency attenuation gradient attribute that changes along with incident angles in the present disclosure;

Figure 5a is a schematic diagram of well-side pre-stack angle domain gather of a drilling well 1 in the present disclosure;

Figure 5b is a schematic diagram of well-side pre-stack angle domain gather of a drilling well 2 in the present disclosure;

Figure 6a is a schematic diagram of AVO characteristic of a reservoir stratum developing section of a well-side gather of the drilling well 1 in the present disclosure;

Figure 6b is a schematic diagram of AVO characteristic of a reservoir stratum developing section of a well-side gather of the drilling well 2 in the present disclosure;

Figure 7a is a schematic diagram of AVO characteristic of a reservoir stratum developing section of a forward-modeling gather of the drilling well 1 in the present disclosure;

Figure 7b is a schematic diagram of AVO characteristic of a reservoir stratum developing section of a forward-modeling gather of the drilling well 2 in the present disclosure;

Figure 8a is a schematic diagram of frequency spectrum characteristics of data stacked from different incident angles in a reservoir stratum developing section of the drilling well 1 in the present disclosure;

Figure 8b is a schematic diagram of frequency spectrum characteristics of data stacked from different incident angles in a reservoir stratum developing section of the drilling well 2 in the present disclosure;

Figure 9a is a schematic diagram of a feature that the high-frequency attenuation gradient attribute changes along with incident angles of the drilling well 1 in the present disclosure;

Figure 9b is a schematic diagram of a feature that the high-frequency attenuation gradient attribute changes along with incident angles of the drilling well 2 in the present disclosure;

Figure 10 is a schematic diagram of analysis of sandstone seismic response characteristic in a pre-stack gather of a well *a* according to an embodiment of the present disclosure;

Figure 11 is a schematic diagram of analysis of sandstone seismic response characteristic in a pre-stack gather of a well *b* according to an embodiment of the present disclosure;

Figure 12 is a schematic diagram of analysis of sandstone seismic response characteristic in a pre-stack gather of a well *c* according to an embodiment of the present disclosure;

Figure 13 is a schematic diagram of a prediction result of a gas-bearing prediction data volume for a validation well Y1 according to an embodiment of the present disclosure;

Figure 14 is a schematic diagram of a prediction result of a gas-bearing prediction data volume for a validation well Y2 according to an embodiment of the present disclosure; and

Figure 15 is a schematic diagram of a prediction result of a gas-bearing prediction data volume for a well B according to an embodiment of the present disclosure.

## Detailed Description of the Embodiments

Hereafter, exemplary embodiments will be described more fully with reference to the accompanying drawings, but the exemplary embodiments may be embodied in different forms, and the present disclosure should not be construed as being limited to the embodiments set forth herein. On the contrary, the purpose of providing these embodiments is to make the present disclosure thorough and complete, and to enable those skilled in the art to fully understand the scope of the present disclosure.

As used herein, the term "and/or" comprises any and all combinations of one or more related listed items.

The terms used herein are only intended to describe specific embodiments, but are not intended to limit the present disclosure. As used herein, the singular forms of "a/an" and "the" are also intended to include plural forms, unless the context clearly indicates otherwise. It will further be understood that, the terms "comprise/include" and/or "consisted of...", when used in the present disclosure, specify the presence of the described features, integers, steps, operations, elements, and/or components, but does not exclude the presence or addition of one or more other features, integers, steps, operations, elements, components, and/or groups thereof.

The embodiments described herein may be described with reference to plan views and/or cross-sectional views by means of the ideal schematic views of the present disclosure. Therefore, the exemplary illustrations may be modified according to manufacturing technologies and/or tolerances. Therefore, the embodiments are not limited to the embodiments shown in the accompanying drawings, but include modifications of configurations that are formed based on manufacturing processes. Therefore, a region illustrated in the accompanying drawings has schematic attributes, and the shape of the region shown in the drawings illustrates the specific shape of the region of an element, but is not intended to be limiting.

Unless otherwise defined, all the terms (including technical and scientific terms) used herein have the same meanings as commonly understood by one of ordinary skill in the art. It will be further understood that, those terms defined in commonly used dictionaries should be interpreted as having a meaning that is consistent with their meaning in the context of the relevant art and the present disclosure, and will not be interpreted as having an idealized or overly formal sense unless expressly so defined herein.

## Embodiment

The present embodiment provides a gas-bearing prediction method based on dominant-incident-angle-and-frequency double-domain attenuation, which will be described in combination with Figures 1-15 and is applied to a project in a certain work area. The specific details thereof are as follows:

S1: pre-stack angle domain gathers, post-stack seismic data, a stratigraphic position interpretation result of a target stratum, and well logging data were acquired, calibration of synthetic seismogram was completed, and it has been determined that seismic response characteristic of riverway sandstones were involved, wherein the post-stack seismic data of the riverway sandstones in this work area involves trough-of-wave response characteristic;

S2: a time range corresponding to the riverway sandstones in the pre-stack angle gathers was determined based on the calibration and a well logging curve, the seismic response characteristic at the riverway sandstones of individual drilling wells in the pre-stack angle gathers were analyzed (Figures 10-12), corresponding effective incident angle ranges for the wells were determined, (32-38 degrees for well a, 24-31 for well b, and 27-30 for well c), statistics were performed in the pre-stack angle gathers to obtain an effective seismic response range of the riverway sandstones of each drilling well (A1=32, B1=38, A2=24, B2=31, A3=27, B3=30), and angle intervals were calculated (C1=6, C2=7, C3=5) to obtain a constant angle interval of C=6;

S3: incident angle stack ranges and corresponding central incident angles of 3 partial-angle-stacked data volumes were determined, wherein an incident angle stack range for seis1 is 1-6, and a corresponding central incident angle center _angle1=3.5; an incident angle stack range for seis2 is D-E, and a corresponding central incident angle center_angle2=(D+E)/2; and an incident angle stack range for seis3 is A-B, and a corresponding central incident angle center_angle3=(A+B)/2, wherein D=(1+A)/2 and E=(6+B)/2. From the incident angle stack ranges, it can be inferred that seis1 is a fixed-incident-angle stack volume; seis3 is data in which incident angle stack ranges of individual channel data are different; and seis2 is also data in which incident angle stack ranges of individual channel data are different, and the incident angle stack range of seis2 is related to the incident angle stack range of seis3. seis2 means to take stack data of incident angle ranges that are between seis3 and seis1. The existence of seis2 stack data volume can make fitting on the rule that the attenuation gradient changes along with the incident angles more stable;

S4: stacking was performed based on the incident angle stack ranges and corresponding central incident angles of the 3 partial-angle-stacked data volumes in step S3. An incident angle stack range of seis1 data volume is a constant of 1-6, thus stacking thereof can be performed directly. However, since the incident angle stack ranges of seis2 and seis3 change with channel number of seismic lines, and an incident angle stack range of seis2 changes along with that of seis3, it is necessary to firstly determine an incident angle stack range of seis3 and a corresponding central incident angle. Based on the time range corresponding to the riverway sandstones in the pre-stack angle gathers obtained in step S2, the existing stratigraphic position data is used to form constraint, so as to ensure that the seismic response characteristic corresponding to the riverway sandstones is within the inter-stratigraphic range, and that inter-stratigraphic geological bodies are of the same sedimentary period. A method for stacking may be implemented via programming, in which, a maximum value at a trough of wave is searched for among stratigraphic positions, and an incident angle corresponding to the maximum negative value is center _angle3; given that A=center_angle3-3, B = center_angle3+3 , the D, E and center_angle2 corresponding to the seis2 data volume may be obtained via calculation according to formulas in step S3; and a stack data volume of seis1, seis2, and seis3 is finally obtained;

S5: high-frequency attenuation gradient attributes were extracted from seis1, seis2 and seis3, respectively, to obtain Qg1, Qg2 and Qg3, and the Qg1, Qg2, and Qg3 were combined with the central incident angles of the 3 seismic data volumes to resynthesize into a pre-stack attenuation gradient gather, wherein the three incident angles in each gather change along with CDPs, with a first incident angle being 3.5, a second incident angle being (D+E)/2, and a third incident angle being (A+B)/2;

S6: a regression fitting on the attenuation gradient attribute and the incident angle at each time point was performed based on the pre-stack attenuation gradient gather newly formed in step S5, so that a gas-bearing predication data volume in which the attenuation gradient attribute changes along with the incident angles was obtained; and

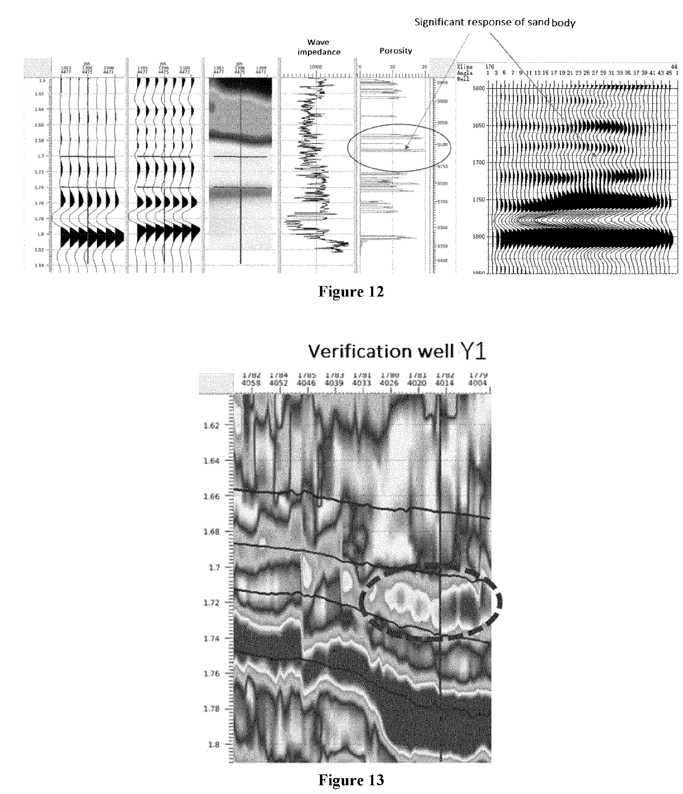

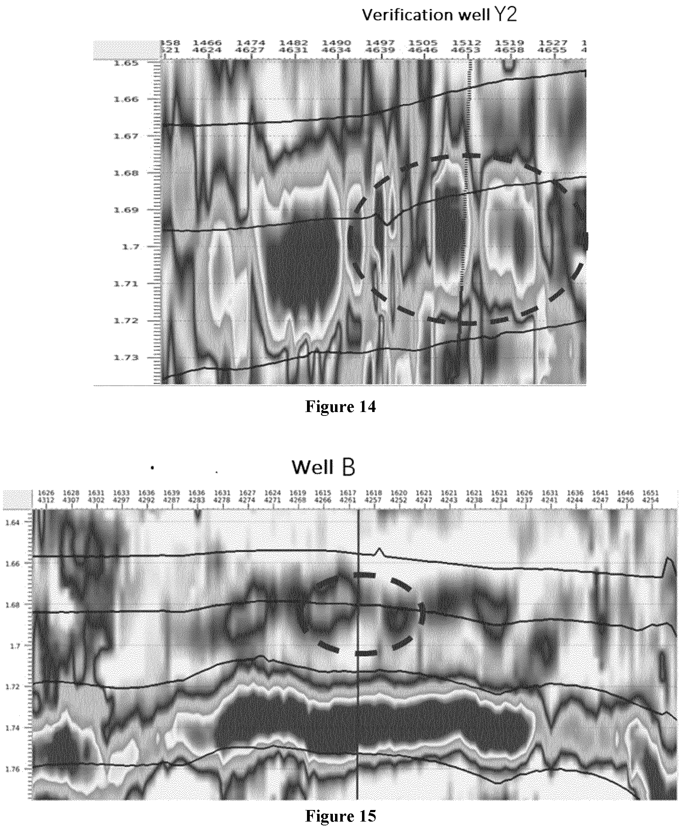

S7: the gas-bearing prediction data volume obtained in step S6 was compared with that of a verification drilling well. A verification well Y1 produces 45000 cubic meters of gas per day, and the prediction result shows that unusual gas-bearing characteristic is significantly consistent with those of the drilling well, as shown in Figure 13; a validation well Y2 produces 22000 cubic meters of gas per day, and the prediction result shows that unusual gas-bearing characteristic is significantly consistent with those of the drilling well, as shown in Figure 14; a verification well B produces 3000 cubic meters per day, and the prediction result shows that no significant unusual gas-bearing characteristic is consistent with those of the drilling well, as shown in Figure 15. The verification performed through the drilling well production data indicates that this method can effectively perform gas-bearing prediction.

In an embodiment, a gas-bearing prediction apparatus based on dominant-incident-angle-and-frequency double-domain attenuation is provided, the apparatus comprising:

a pre-stack gather collection unit, configured to collect pre-stack angle domain gathers and determine incident angle ranges of the pre-stack angle domain gathers;

a data processing unit, configured to perform stacking on the pre-stack angle domain gathers according to effective incident angle ranges, and obtain partial-angle-stacked seismic data;

a high-frequency attenuation gradient attribute extraction unit, configured to extract high-frequency attenuation gradient attributes of the partial-angle-stacked seismic data;

a regression fitting unit, configured to perform regression fitting based on an attenuation gradient attribute and an incident angle at each time point, to obtain a gradient data volume in which the attenuation gradient attribute changes along with the incident angle, that is, a gas-bearing sensitive factor; and

a prediction unit, configured to extract feature of the gas-bearing sensitive factor of a the target stratigraphic position that change with the incident angle, to complete its gas-bearing prediction.

In an embodiment, a computer-readable storage medium is provided, on which a computer program is stored, which can be executed by one or more processors to implement the method described in the above embodiment.

In one embodiment, provided is an electronic device comprising a memory and one or more processors, wherein a computer program is stored on the memory, the memory is connected in a communication manner with the one or more processors, and the computer program, when executed by the one or more processors, implements the method described in the above embodiment.

In summary, in the gas-bearing prediction method based on dominant-incident-angle-and-frequency double-domain attenuation of the present disclosure, the pre-stack angle domain gathers are firstly subjected to stacking in terms of varied incident angle ranges to obtain a plurality of partially-stacked data volumes; post-stack high-frequency attenuation gradient attributes are then extracted from the plurality of partially-stacked data volumes, wherein since the plurality of post-stack high-frequency attenuation gradient attribute volumes contain information of angles, which are different from the conventional high-frequency attenuation gradient attribute volumes that are directly calculated from the post-stack seismic data; and then, the plurality of post-stack high-frequency attenuation gradient attribute volumes are rearranged according to angles to form a pre-stack gather having only these few angles, wherein the energy of this new pre-stack gather represents the high-frequency attenuation gradient attributes, and these angles vary for each CDP point; and finally, for the new pre-stack gather, a rule that the attribute changes along with the incident angles is fitted to obtain a gas-bearing sensitive factor.

It may be understood by one of ordinary skill in the art that, all or some steps in the above disclosed methods and functional modules/units in the above disclosed apparatus may be implemented as a software, firmware, hardware, and an appropriate combination thereof. In hardware implementation, the division between functional modules/units mentioned in the above description does not necessarily correspond to a division of physical components. For example, a physical component may have plurality of functions, or a function or step may be executed collaboratively by several physical components. Some or all physical components may be implemented as a software executed by processors such as a central processor, a digital signal processor, or a microprocessor, or may be implemented as a hardware, or may be implemented as an integrated circuit such as an application-specific integrated circuit. Such a software may be distributed on a computer-readable medium, which may include a computer storage medium (or a non-temporary medium) and a communication medium (or a temporary medium). As is well known to one of ordinary skill in the art, the term computer storage medium includes volatile and non-volatile mediums, removable and non-removable mediums implemented in any method or technology for storing information (such as computer-readable instructions, data structures, program modules, or other data). The computer storage medium includes but is not limited to a RAM, a ROM, a EEPROM, a flash memory or other storage technologies, a CD-ROM, a digital versatile disc (DVD) or other optical storages, a magnetic cassette, a magnetic tape, a magnetic disk storage or other magnetic storage devices, or any other medium that can be configured to store desired information and can be accessed by a computer. In addition, it is well known to one of ordinary skill in the art that, the communication medium typically contains computer-readable instructions, data structures, program modules, or other data in modulated data signals in a carrier or other transmission mechanisms, and may include any information delivery medium.

Exemplary embodiments have been disclosed herein. Although specific terms are used, they are only used for illustration purpose and should be interpreted as having a general illustrative meaning but are not intended for limiting purposes. In some instances, it is obvious to those skilled in the art that, unless otherwise clearly indicated, features, characteristics and/or elements described in conjunction with a specific embodiment may be used alone or in combination with features, characteristics and/or elements described in conjunction with other embodiments. Therefore, those skilled in the art will understand that, various modifications may be made in forms and details without departing from the scope of the present disclosure as set forth in the appended claims.

## Claims

1. A gas-bearing prediction method based on dominant incident angle and frequency double-domain attenuation, comprising:

   capturing an attenuation attribute from a pre-stack gather within a range of dominant incident angles, and forming a gas-bearing sensitive factor to complete gas-bearing prediction,
   the gas-bearing sensitive factor is expressed as $a$, and has an expression:

   $$a = \frac{n\sum_{i=1}^{n} x_i y_i - \sum_{i=1}^{n} x_i \sum_{i=1}^{n} y_i}{n\sum_{i=1}^{n} x_i^2 - \sum_{i=1}^{n} x_i}$$

   wherein $y_i$ is an attenuation gradient attribute value at an angle of $x_i$, $x_i$ is an incident angle, $n$ is a number of incident angles, and $n$ is an integer of $\geq 3$.

2. The gas-bearing prediction method based on dominant incident angle and frequency double-domain attenuation of claim 1, **characterized in that**, the attenuation attribute is an improved high-frequency attenuation gradient attribute, and the expression thereof comprises:

$$y = \frac{E'_2 - E'_1}{f_2 - f_1} \;, \qquad E'_1 = \int\limits_{f_{max}}^{f_1} f A(f)^2 \, df \;, \qquad E'_2 = \int\limits_{f_{max}}^{f_2} f A(f)^2 \, df \;,$$

wherein, $f$ is an frequency, measured in Hz;

$$\frac{\int\limits_{f_{max}}^{f} f A(f)^k \, df}{\int\limits_{f_{max}}^{\infty} A(f)^k \, df} = \mathrm{Fre1}$$

$f_1$ is an frequency at ⎯⎯⎯⎯⎯⎯ , measured in Hz;

$$\frac{\int\limits_{f_{max}}^{f} f A(f)^k \, df}{\int\limits_{f_{max}}^{\infty} A(f)^k \, df} = \mathrm{Fre2}$$

$f_2$ is an frequency at ⎯⎯⎯⎯⎯⎯ , measured in Hz;

$f_{max}$ is an frequency corresponding to a peak energy $Amp_{max}$, measured in Hz;

$A(f)$ is an amplitude spectrum;

$E'_1$ is a seismic wave energy at high-frequency portion Fre1 with a value ranging from 51% to 99%; and

$E'_2$ is a seismic wave energy at high-frequency portion Fre2 with a value ranging from 51% to 99%, and Fre2>Fre1.

3. The gas-bearing prediction method based on dominant incident angle and frequency double-domain attenuation of claim 2, **characterized in that**, a rule that the improved high-frequency attenuation gradient attribute changes along with incident angles is obtained by fitting, by using a least square method, a rule that an attenuation gradient changes along with incident angles.

4. The gas-bearing prediction method based on dominant incident angle and frequency double-domain attenuation of any one of claims 1-3, **characterized in that**, fitting, by using a least square method, the rule that an attenuation gradient changes along with incident angles comprises: constructing an objective function based on a principle of least square:

$$\delta = \min \sum_{i=1}^{n} \left[ y_i - \left( a x_i + b \right) \right]^2$$

wherein $y=\{y_1, y_2, \ldots y_n\}$ is a value of the attenuation gradient attribute, $x=\{x_1, x_2, \ldots x_n\}$ is a corresponding angle, $a$ is a gas-bearing sensitive factor, i.e., a gradient to be calculated, and $b$ is a fitting coefficient of least square; and $n$ is the number of incident angles, and $n$ is an integer of $\geq 3$;

deriving $a$ and $b$ respectively to minimize the objective function, and transforming a problem how to solve the objective function into solving a matrix:

$$\begin{bmatrix} n & \sum\limits_{i=1}^{n} x_i \\ \sum\limits_{i=1}^{n} x_i & \sum\limits_{i=1}^{n} x_i^2 \end{bmatrix} \begin{bmatrix} b \\ a \end{bmatrix} = \begin{bmatrix} \sum\limits_{i=1}^{n} y_i \\ \sum\limits_{i=1}^{n} x_i y_i \end{bmatrix}$$

and performing calculation to obtain:

$$a = \frac{n\sum\limits_{i=1}^{n} x_i y_i - \sum\limits_{i=1}^{n} x_i \sum\limits_{i=1}^{n} y_i}{n\sum\limits_{i=1}^{n} x_i^2 - \sum\limits_{i=1}^{n} x_i}$$

wherein $a$ is the gas-bearing sensitive factor, $b$ is the fitting coefficient of least square, $y_i$ is a value of the attenuation gradient attribute at an angle of $x_i$, $n$ is the number of incident angles, and $n$ is an integer of $\geq 3$.

5. The gas-bearing prediction method based on dominant incident angle and frequency double-domain attenuation of any one of claims 1-4, **characterized in that**, the method comprises steps of:

S1: acquiring pre-stack angle domain gathers, post-stack seismic data, a stratigraphic position interpretation result of a target stratum, and well logging data, and completing calibration of synthetic seismogram to obtain seismic response characteristic of the target stratum;

S2: determining a time range corresponding to the target stratum in the pre-stack angle gathers based on the calibration and a well logging curve, and analyzing the seismic response characteristic of the target stratum of each drilling well to obtain a range of corresponding effective incident angles;

S3: determining, according to the range of the effective incident angles obtained in step S2, incident angle stack ranges and corresponding central incident angles of n partial-angle-stacked data volumes, wherein n is an integer of $\geq 3$;

S4: performing stacking based on the incident angle stack ranges and corresponding central incident angles of n partial-angle-stacked data volumes obtained in step S3, to obtain partial-angle-stacked data; wherein n is an integer of $\geq 3$;

S5: extracting high-frequency attenuation gradient attributes respectively from the partial-angle-stacked data obtained in step S4, and combining them with the corresponding central incident angles of the n partial-angle-stacked data volumes to resynthesize into a pre-stack attenuation gradient gather, wherein n is an integer of $\geq 3$;

S6: performing regression fitting on an attenuation gradient attribute and an incident angle at each time point based on the pre-stack attenuation gradient gather newly formed in step S5 to obtain a gradient data volume in which the attenuation gradient attribute changes along with the incident angle; and

S7: comparing the gradient data volume obtained in step S6 with that of the drilling well, and performing analysis to obtain a gas-bearing prediction result of the target stratum.

6. The gas-bearing prediction method based on dominant incident angle and frequency double-domain attenuation of claim 5, **characterized in that**, in the step S3, determining, according to the range of the effective incident angles, incident angle stack ranges and corresponding central incident angles of n partial-angle-stacked data volumes comprises:

denoting the range of the effective incident angles as A to B, wherein, A and B both represent incident angles, denoting a range of effective seismic response of the target stratums of individual drilling wells in the pre-stack gathers as A1, B1, A2, B2,..., Am, Bm, wherein m is a number of the drilling wells;

calculating angle intervals C1=B1-A1, C2=B2-A2,..., Cm=Bm-Am, wherein m is the number of the drilling wells; obtaining a constant angle interval C=(C1+C2+...+Cm)/m, wherein m is the number of the drilling wells; and dividing, based on the constant angle interval, the n partial-angle-stacked data volumes to obtain incident angle stack ranges, and performing calculation to obtain corresponding central incident angles.

7. The gas-bearing prediction method based on dominant incident angle and frequency double-domain attenuation of claim 6, **characterized in that**, in the step S6, an approach for the fitting comprises performing fitting by adopting a least square method.

8. A gas-bearing prediction apparatus based on dominant incident angle and frequency double-domain attenuation, comprising:

a pre-stack gather collection unit, configured to collect pre-stack angle domain gathers and determine incident angle ranges of the pre-stack angle domain gathers;

a data processing unit, configured to perform stacking on the pre-stack angle domain gathers according to effective incident angle ranges, and obtain partial-angle-stacked seismic data;

a high-frequency attenuation gradient attribute extraction unit, configured to extract high-frequency attenuation gradient attributes of the partial-angle-stacked seismic data;

a regression fitting unit, configured to perform regression fitting based on an attenuation gradient attribute and an incident angle at each time point, to obtain a gradient data volume in which the attenuation gradient attribute changes along with the incident angle, that is, a gas-bearing sensitive factor; and

a prediction unit, configured to extract a feature that the gas-bearing sensitive factor of a target stratigraphic position changes along with incident angles, to complete gas-bearing prediction of the target stratigraphic position.

9. A computer-readable storage medium on which a computer program is stored, wherein the computer program can be executed by one or more processors to implement the method of any one of claims 1-7.

10. An electronic device, comprising a memory and one or more processors, wherein a computer program is stored on the memory, and the computer program, when executed by the one or more processors, implements the method of any one of claims 1-7.

**Figure 1**

**Figure 2**

**Figure 3a**

**Figure 3b**

**Figure 4**

Figure 5a

Figure 5b

35 degrees

Figure 6a

24 degrees

Figure 6b

Figure 7a

Figure 7b

**Figure 8a**

**Figure 8b**

High-frequency attenuation gradient (absolute value)

**Figure 9a**

High-frequency attenuation gradient (absolute value)

Incident angle stack range

**Figure 9b**

**Figure 10**

**Figure 11**

Figure 12

Verification well Y1

Figure 13

Verification well Y2

**Figure 14**

Well B

**Figure 15**

## INTERNATIONAL SEARCH REPORT

| International application No. |
|---|
| **PCT/CN2023/122765** |

### A. CLASSIFICATION OF SUBJECT MATTER

G01V1/30(2006.01)i

According to International Patent Classification (IPC) or to both national classification and IPC

### B. FIELDS SEARCHED

Minimum documentation searched (classification system followed by classification symbols)

IPC:G01V1/-

Documentation searched other than minimum documentation to the extent that such documents are included in the fields searched

Electronic data base consulted during the international search (name of data base and, where practicable, search terms used)

CNABS, WPABSC, CNTXT, DWPI, USTXT, CNKI: 优势 S 入射角, 有效 S入射角, 入射角, 角度, 频率, 衰减, 梯度衰减, 含气性, 含气, 气藏, 储层, 叠前, 地震, 敏感因子, 最小二乘, 回归拟合, 目的层, 目标层, 测井, 地震响应, 角叠加, 角度域道集, 道集, seism+, earthquake, grads, angle, gass+, gene, frequency, attenuation, damply, artesian well, hole.

### C. DOCUMENTS CONSIDERED TO BE RELEVANT

| Category* | Citation of document, with indication, where appropriate, of the relevant passages | Relevant to claim No. |
|---|---|---|
| PX | CN 115980847 A (CHINA PETROCHEMICAL CO., LTD. et al.) 18 April 2023 (2023-04-18) description, paragraphs 7-172, and figures 1-6 | 8 |
| A | CN 114428286 A (CHINA PETROCHEMICAL CO., LTD. et al.) 03 May 2022 (2022-05-03) description, paragraphs 1-79, and figures 1-7 | 1-10 |
| A | CN 104714252 A (CHINA PETROCHEMICAL CO., LTD. et al.) 17 June 2015 (2015-06-17) entire document | 1-10 |
| A | CN 105487122 A (CHINA PETROCHEMICAL CO., LTD. et al.) 13 April 2016 (2016-04-13) entire document | 1-10 |
| A | CN 108957534 A (CHINA NATIONAL PETROLEUM CORP.) 07 December 2018 (2018-12-07) entire document | 1-10 |
| A | CN 111045083 A (CHINA PETROCHEMICAL CO., LTD. et al.) 21 April 2020 (2020-04-21) entire document | 1-10 |

☑ Further documents are listed in the continuation of Box C. ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **21 November 2023** | **07 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/122765**

**C.    DOCUMENTS CONSIDERED TO BE RELEVANT**

| Category* | Citation of document, with indication, where appropriate, of the relevant passages | Relevant to claim No. |
|---|---|---|
| A | CN 112630832 A (CHINA PETROCHEMICAL CO., LTD. et al.) 09 April 2021 (2021-04-09)<br>entire document | 1-10 |
| A | CN 113703041 A (CHINA PETROCHEMICAL CO., LTD.) 26 November 2021 (2021-11-26)<br>entire document | 1-10 |
| A | US 10520644 B1 (EMERSON PARADIGM HOLDING LLC. et al.) 31 December 2019 (2019-12-31)<br>entire document | 1-10 |
| A | US 2009080289 A1 (APEX SPECTRAL TECHNOLOGY INC.) 26 March 2009 (2009-03-26)<br>entire document | 1-10 |
| A | US 2021255346 A1 (CHEVRON USA INC.) 19 August 2021 (2021-08-19)<br>entire document | 1-10 |
| A | 孙淑琴 (SUN, Shuqin). "叠前地震属性在储层预测及油气检测中的方法研究 (Research on Pre-Stack Seismic Attributes Applied in Reservoir Prediction and Hydrocarbon Detection)" 中国优秀硕士学位论文全文数据库 (Chinese Master's Theses Full-Text Database), No. 08, 15 August 2010 (2010-08-15), ISSN: 1674-0246, entire document | 1-10 |

Form PCT/ISA/210 (second sheet) (July 2022)

**INTERNATIONAL SEARCH REPORT**
Information on patent family members

International application No.

**PCT/CN2023/122765**

| Patent document cited in search report | | | Publication date (day/month/year) | Patent family member(s) | | | Publication date (day/month/year) |
|---|---|---|---|---|---|---|---|
| CN | 115980847 | A | 18 April 2023 | None | | | |
| CN | 114428286 | A | 03 May 2022 | None | | | |
| CN | 104714252 | A | 17 June 2015 | None | | | |
| CN | 105487122 | A | 13 April 2016 | None | | | |
| CN | 108957534 | A | 07 December 2018 | None | | | |
| CN | 111045083 | A | 21 April 2020 | None | | | |
| CN | 112630832 | A | 09 April 2021 | None | | | |
| CN | 113703041 | A | 26 November 2021 | None | | | |
| US | 10520644 | B1 | 31 December 2019 | EP | 3683601 | A1 | 22 July 2020 |
| | | | | US | 10705254 | B1 | 07 July 2020 |
| | | | | US | 2020225382 | A1 | 16 July 2020 |
| US | 2009080289 | A1 | 26 March 2009 | EP | 2201409 | A2 | 30 June 2010 |
| | | | | EP | 2201409 | A4 | 25 May 2016 |
| | | | | WO | 2009042355 | A2 | 02 April 2009 |
| | | | | WO | 2009042355 | A3 | 07 May 2009 |
| | | | | CA | 2700627 | A1 | 02 April 2009 |
| | | | | CA | 2700627 | C | 05 July 2016 |
| | | | | US | 7876643 | B2 | 25 January 2011 |
| | | | | JP | 2010540902 | A | 24 December 2010 |
| | | | | JP | 5355575 | B2 | 27 November 2013 |
| | | | | AU | 2008305385 | A1 | 02 April 2009 |
| | | | | AU | 2008305385 | B2 | 06 December 2012 |
| US | 2021255346 | A1 | 19 August 2021 | WO | 2021165789 | A1 | 26 August 2021 |
| | | | | EP | 4107550 | A1 | 28 December 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022112158237